(19) Europäisches Patentamt
European Patent Office
Office européen des brevets

(11) **EP 4 194 328 A1**

(12) **EUROPEAN PATENT APPLICATION**
published in accordance with Art. 153(4) EPC

(43) Date of publication:
**14.06.2023  Bulletin 2023/24**

(21) Application number: **21853066.5**

(22) Date of filing: **04.08.2021**

(51) International Patent Classification (IPC):
**B63B 21/16** (2006.01)    **B63B 21/20** (2006.01)

(52) Cooperative Patent Classification (CPC):
**B63B 21/16; B63B 21/20**

(86) International application number:
**PCT/JP2021/028913**

(87) International publication number:
**WO 2022/030533 (10.02.2022 Gazette 2022/06)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **05.08.2020  JP 2020132841**

(71) Applicant: **KAWASAKI JUKOGYO KABUSHIKI
KAISHA
Kobe-shi, Hyogo 650-8670 (JP)**

(72) Inventors:
• **OE, Hiroshi
Hyogo, 650-8670 (JP)**
• **KAZAMA, Eiki
Hyogo, 650-8670 (JP)**
• **NODA, Takashi
Hyogo, 650-8670 (JP)**

(74) Representative: **Dehns
St. Bride's House
10 Salisbury Square
London EC4Y 8JD (GB)**

(54) **MOORING LINE TENSION MONITORING SYSTEM**

(57)    A mooring line tension monitoring system includes: a winch drum (3), around which a mooring line (11) is wound; and a band brake (4) including a brake drum (41) that rotates together with the winch drum (3). The mooring line tension monitoring system further includes: a winding layer number detector that detects the number of winding layers of the mooring line (11) on the winch drum (3); a load cell (5) that is incorporated in the band brake (4) and that measures band tension; and control circuitry that calculates tension applied to the mooring line (11) based on the number of winding layers of the mooring line (11) detected by the winding layer number detector and the band tension measured by the load cell (5).

FIG. 3

## Description

### Technical Field

The present disclosure relates to a mooring line tension monitoring system.

### Background Art

A ship is mounted with a winch for a mooring line. The mooring line is used to moor the ship to, for example, a quay wall. While the ship is moored, changes in oceanographic or weather conditions may cause excessive tension to be applied to the mooring line, and as a result, breakage of the mooring line may occur. In light of this, it is desired that the tension of the mooring line be monitored while the ship is moored.

For example, Patent Literature 1 discloses a mooring line tension monitoring system capable of monitoring the tension of a mooring line while a ship is moored (in Patent Literature 1, this system is referred to as a "mooring line monitoring device". In this system, a split drum including a storage drum and a tension drum is used as a winch drum, and a load cell is incorporated in a band brake including a brake drum. While the ship is moored, the mooring line is wound around the tension drum of the winch drum and the radius from the center of the winch drum to the line of action of tension is made constant. A load measured by the load cell is converted into mooring line tension.

### Citation List

### Patent Literature

Japanese Laid-Open Patent Application Publication No. 2002-211478

### Summary of Invention

### Technical Problem

However, the length of the split drum is greater than the length of an ordinary winch drum (i.e., the width in the axial direction of the split drum is greater than the width in the axial direction of an ordinary winch drum) by the length (i.e., the width in the axial direction) of the tension drum. Therefore, in a case where the split drum is used, the installation location of the winch is restricted. In addition, in the case of the mooring line tension monitoring system of Patent Literature 1, at the time of mooring, it is necessary to perform work of winding the mooring line around the tension drum.

In view of the above, an object of the present disclosure is to provide a mooring line tension monitoring system capable of monitoring the tension of a mooring line without using a split drum while a ship is moored.

### Solution to Problem

In order to solve the above-described problems, a mooring line tension monitoring system according to the present disclosure includes: a winch drum, around which a mooring line is wound; a band brake including a brake drum that rotates together with the winch drum; a winding layer number detector that detects the number of winding layers of the mooring line on the winch drum; a load cell that is incorporated in the band brake and that measures band tension; and control circuitry that calculates tension applied to the mooring line based on the number of winding layers of the mooring line detected by the winding layer number detector and the band tension measured by the load cell.

According to the above configuration, the winding layer number detector detects the number of winding layers of the mooring line on the winch drum. Therefore, the tension of the mooring line can be calculated by using the detected number of winding layers, instead of making constant the radius from the center of the winch drum to the line of action of the tension. This makes it possible to monitor the tension of the mooring line without using a split drum while a ship is moored.

### Advantageous Effects of Invention

The present disclosure provides a mooring line tension monitoring system capable of monitoring the tension of a mooring line without using a split drum while a ship is moored.

**Brief Description of Drawings**

FIG. 1 is a front view of a mechanical part of a mooring line tension monitoring system according to one embodiment of the present disclosure.

FIG. 2 is a sectional view taken along line II-II of FIG. 1.

FIG. 3 shows a schematic configuration of a band brake.

FIG. 4 shows a variation of a winding layer number detector.

FIG. 5 shows another variation of the winding layer number detector.

FIG. 6 shows yet another variation of the winding layer number detector.

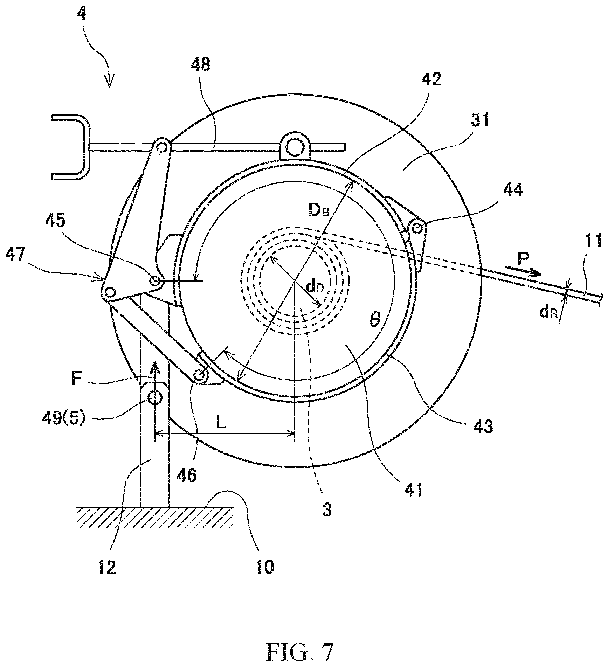

FIG. 7 shows a schematic configuration of a variation of the band brake.

**Description of Embodiments**

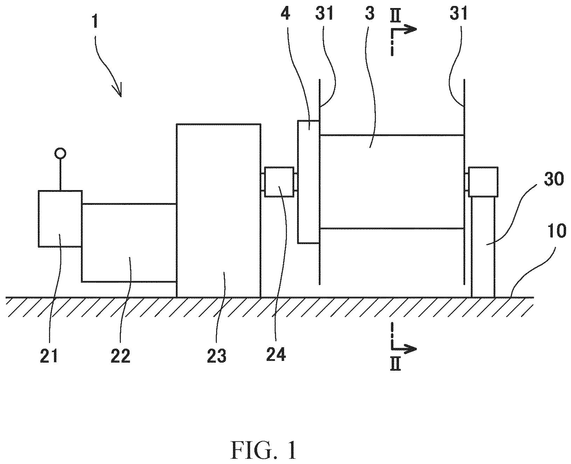

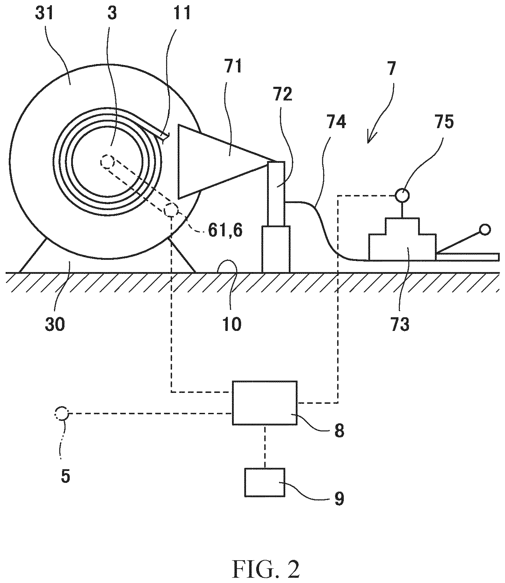

FIG. 1 and FIG. 2 show a mooring line tension monitoring system 1 according to one embodiment of the present disclosure. The system 1 includes: a winch drum 3, which is rotatably supported by a support base 30 located on a deck 10 of a ship; and a band brake 4, which allows the winch drum 3 to rotate, or prevents the winch drum 3 from rotating (i.e., brakes the winch drum 3).

A mooring line 11 (the illustration of which is omitted in FIG. 1 for the purpose of simplifying the drawing) is wound around the winch drum 3. Flanges 31 protrude radially outward from both sides of the winch drum 3, respectively.

The winch drum 3 is driven by a prime mover 22 via a reduction gear 23. The band brake 4 is located along the flange 31 on the reduction gear 23 side. A clutch 24 is located between the band brake 4 and the reduction gear 23. In the present embodiment, the clutch 24 is a manually operated clutch.

The prime mover 22 may be an electric motor, or may be a hydraulic motor. In the present embodiment, the prime mover 22 includes an operator 21, and the prime mover 22 is manually operated. Alternatively, the prime mover 22 may be electrically controlled by below-described control circuitry 8.

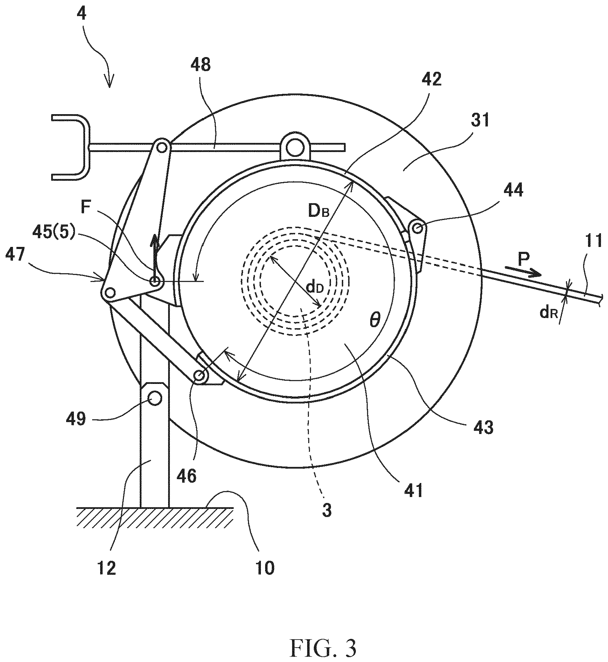

In the present embodiment, the band brake 4 is a manually operated band brake. Specifically, as shown in FIG. 3, the band brake 4 includes a brake drum 41 fixed to the flange 31. That is, the brake drum 41 rotates together with the winch drum 3. The band brake 4 further includes a pair of arc-shaped bands 42 and 43. One end of the band 42 and one end of the band 43 are coupled to each other via a pin 44. A pin 45 is located at the other end of the band 42, and a pin 46 is located at the other end of the band 43.

The pins 45 and 46 are coupled to a mechanical linkage 47. The mechanical linkage 47 moves the pins 45 and 46 toward each other, or away from each other, in accordance with rotation of an operating shaft 48. The mechanical linkage 47 is coupled, via a pin 49, to a support pillar 12 located on the deck 10. In the present embodiment, the pin 45, which is positioned immediately above the support pillar 12, is a pin-type load cell 5. In other words, the load cell 5 is incorporated in the band brake 4.

When the pins 45 and 46 are moved toward each other by the mechanical linkage 47 such that the bands 42 and 43 tighten the brake drum 41, band tension F is applied upward to the load cell 5. That is, the load cell 5 measures the band tension F. Incidentally, when tension P is applied to the mooring line 11, the tension P causes rotational force to be applied to the winch drum 3, and upward force is applied to the load cell 5. Accordingly, the band tension F measured by the load cell 5 significantly depends on the tension P of the mooring line 11.

At the time of mooring, after the mooring line 11 secured to a bitt or the like on a quay wall is wound around the winch drum 3 by the prime mover 22, the band brake 4 is tightened and the clutch 24 is disengaged.

As shown in FIG. 2, the mooring line tension monitoring system 1 further includes: a winding layer number detector 6, which detects the number of winding layers (hereinafter, also referred to as a "winding layer number") of the mooring line 11 on the winch drum 3; and the aforementioned control circuitry 8, which is electrically connected to the winding layer number detector 6 and the load cell 5. The control circuitry 8 is electrically connected also to a display 9. The display 9 is installed, for example, near the winch, or in the bridge or cargo control room of the ship.

For example, the control circuitry 8 is a computer including memories such as a ROM and RAM, a storage such as a HDD or SSD, and a CPU. The CPU executes a program stored in the ROM or the storage.

The winding layer number detector 6 includes: a sensor that measures a numerical value relating to the number of winding layers of the mooring line 11; and an operational processor that converts the numerical value measured by the sensor into the number of winding layers of the mooring line. The operational processor may be incorporated in the control circuitry 8. In the present embodiment, the sensor that measures the numerical value relating to the number of winding layers of the mooring line 11 is an encoder 61, which measures the rotational angle of the winch drum 3.

To be more specific, the encoder 61 is located on a sprocket that is positioned away from the winch drum 3. A chain is wound around the sprocket and another sprocket mounted to the winch drum 3.

The control circuitry 8 calculates tension P [kN] applied to the mooring line 11 based on a winding layer number N of the mooring line 11 detected by the winding layer number detector 6 and band tension F [kN] measured by the load cell 5. The control circuitry 8 outputs the calculated tension P to the display 9.

Specifically, the control circuitry 8 calculates the tension P applied to the mooring line 11 by using the following tension calculation formula (1), which includes a tension coefficient K and a calibration coefficient $\alpha$.

[Math. 1]

$$P = F \times \frac{D_B}{d_D + (2 \times N - 1) \times d_R} \times K \times \alpha \quad \cdots (1)$$

$D_B$: brake drum diameter [mm]
$d_R$: mooring line diameter [mm]
$d_D$: winch drum diameter [mm]

The tension coefficient K in the tension calculation formula (1) is calculated by using a formula (2) shown below.

[Math. 2]

$$K = 1 - \frac{1}{e^{(\mu \times \theta)}} \quad \cdots (2)$$

$\mu$: frictional coefficient between the bands and the brake drum
$\theta$: contact angle between the bands and the brake drum

As shown in FIG. 3, the contact angle $\theta$ between the bands and the brake drum is an angle between the center of the pin 45 and the center of the pin 46.

In relation to the calibration coefficient $\alpha$ in the tension calculation formula (1), the mooring line tension monitoring system 1 includes a calibrator 7 as shown in FIG. 2. In an initial state, the control circuitry 8 sets the calibration coefficient $\alpha$ to 1.0.

The calibrator 7 is equipment to check, when the ship is not moored, a relationship between the band tension F of the band brake 4 and virtual tension $P_v$ of the mooring line 11 at a rated winding layer number $N_r$, which is a rated number of winding layers, of the mooring line 11. The rated winding layer number $N_r$ is arbitrarily set to, for example, 1 to 3 layers.

Specifically, the calibrator 7 includes: a triangular link plate 71, which is non-rotatably coupled to the flange 31 and which protrudes laterally from the flange 31; a jack (a hydraulic cylinder) 72, which moves the distal end of the link plate 71 upward/downward; and a hand pump 73 connected to the jack 72 by a hose 74. Pressure $P_r$ of a hydraulic liquid pressurized by the hand pump 73 is measured by a pressure sensor 75. The configuration of the calibrator 7 is not limited to this example, but is modifiable as necessary.

In a state where the ship is not moored, when the hand pump 73 is operated with the band brake 4 being tightened, the hydraulic liquid is fed to the jack 72 through the hose 74, and the jack 72 is extended. As a result of the jack 72 being extended, the band tension F of the band brake 4 measured by the load cell 5 increases. The control circuitry 8 calculates the virtual tension $P_v$ [kN] of the mooring line 11 by using a formula (3) shown below.

[Math. 3]

$$P_r = \frac{P_v \times D_r \times 10}{2 \times L \times A_S} \quad \cdots (3)$$

$P_r$: Pressure [MPa] measured by the pressure sensor 75
$L$: distance [mm] from the center of the winch drum 3 to the center of the jack 72
$A_s$: head side pressure receiving area [mm$^2$] of the hydraulic cylinder, which is the jack 72
$D_r$: mooring line center circle diameter of the surface layer at the rated winding layer number Nr

$$D_r = d_D + N_r \times d_R$$

Based on a result of the checking by the calibrator 7, the control circuitry 8 sets the calibration coefficient $\alpha$.

Depending on the result of the checking by the calibrator 7, in some cases, the calibration coefficient α may remain 1.0, and in other cases, the calibration coefficient α may be set to less than 1.0, or set to greater than 1.0.

To be more specific, the control circuitry 8 substitutes the band tension F that is measured by the load cell 5 when the virtual tension $P_v$ of the mooring line 11 is calculated by using the formula (3) into the formula (1), and sets the calibration coefficient α such that the tension P calculated by using the formula (1) coincides with the virtual tension $P_v$ of the mooring line 11 calculated by using the formula (3).

As described above, in the mooring line tension monitoring system 1 of the present embodiment, the winding layer number detector 6 detects the winding layer number N of the mooring line 11 on the winch drum 3. Therefore, the tension P of the mooring line 11 can be calculated by using the detected winding layer number N, instead of making constant the radius from the center of the winch drum to the line of action of the tension. This makes it possible to monitor the tension P of the mooring line 11 without using a split drum while the ship is moored. Also, since the calculated tension P is outputted from the control circuitry 8 to the display 9, a ship crew looking at the display 9 can know the tension P of the mooring line 11.

If the tension P of the mooring line 11 exceeds a specific value, the control circuitry 8 causes an unshown alarm to generate an alarm sound. A ship crew who has heard the alarm sound releases the band brake 4. Consequently, the mooring line 11 is unwound. Thereafter, the ship crew engages the clutch and winds the mooring line 11 around the winch drum 3. Then, the ship crew tightens the band brake 4, and disengages the clutch 24.

(Variations)

The present disclosure is not limited to the above-described embodiment. Various modifications can be made without departing from the scope of the present disclosure.

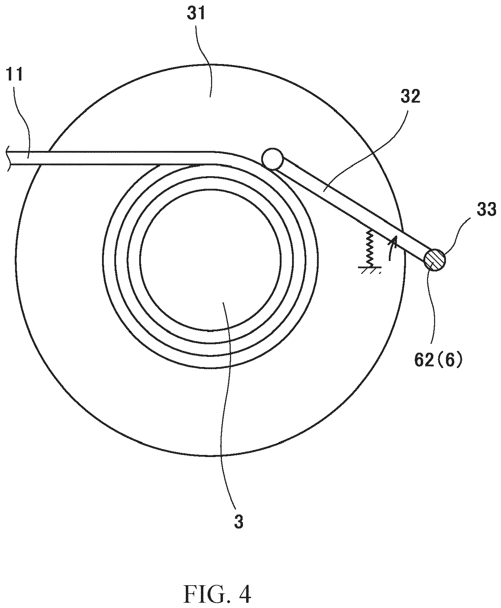

For example, the sensor included in the winding layer number detector 6, the sensor measuring the numerical value relating to the number of winding layers of the mooring line 11, is not limited to the encoder 61, which measures the rotational angle of the winch drum 3. As one example, as shown in FIG. 4, in a case where a holder 32, which holds down the mooring line 11 against the winch drum 3, is swingable about a supporting point 33, the sensor included in the winding layer number detector 6, the sensor measuring the numerical value relating to the number of winding layers of the mooring line 11, may be an encoder (or an inclination sensor) 62, which measures the angle of the holder 32.

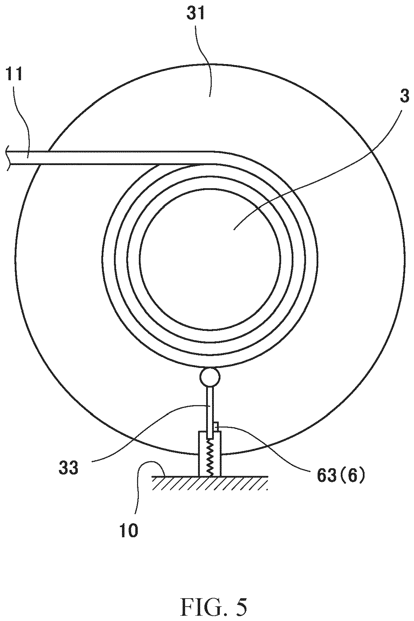

As another example, as shown in FIG. 5, in a case where a holder 33, which holds down the mooring line 11 against the winch drum 3, is reciprocable, the sensor included in the winding layer number detector 6, the sensor measuring the numerical value relating to the number of winding layers of the mooring line 11, may be a stroke sensor 63, which measures the position of the holder 33.

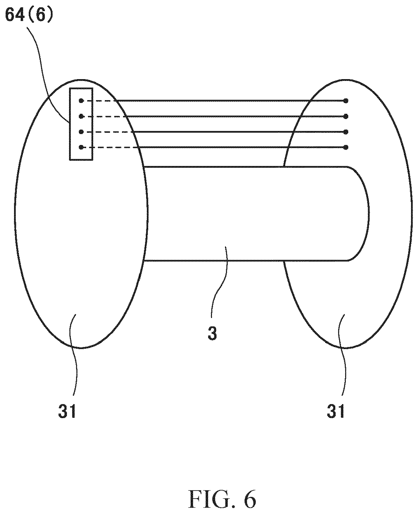

The winding layer number detector 6 may directly detect the number of winding layers of the mooring line 11 on the winch drum 3 by using a camera. Alternatively, as shown in FIG. 6, the winding layer number detector 6 may directly detect the number of winding layers of the mooring line 11 on the winch drum 3 by using an infrared unit 64 located on the flange 31. In the case of using the infrared unit 64, at a predetermined position between mooring hardware (e.g., a guide roller for the mooring line 11) located on the deck 10 and the winch drum 3, the height of the mooring line 11 from the deck 10 may be measured by using the infrared unit 64, and the height may be converted into the number of winding layers.

The calibrator 7 may be eliminated, and the tension calculation formula (1) need not include the calibration coefficient α. However, in the case of including the calibrator 7 and setting the calibration coefficient α in the tension calculation formula (1) based on the result of the checking by the calibrator 7 as in the above-described embodiment, the tension P of the mooring line 11 can be calculated precisely.

Further, although the band brake 4 is operated manually in the above-described embodiment, the band brake 4 may be operated electrically. In this case, when the tension P of the mooring line 11 calculated by the control circuitry 8 exceeds the specific value, the control circuitry 8 may release the band brake 4. In a case where not only the band brake 4, but also the clutch 24 is operated electrically, after the band brake 4 is released, the control circuitry 8 may engage the clutch 24 and wind the loose mooring line 11 around the winch drum 3. Such a configuration is useful for reducing the number of ship crews and for autonomous navigation.

Further, as shown in FIG. 8, the pin-type load cell 5 incorporated in the band brake 4 may be the pin 49 between the support pillar 12 located on the deck 10 and the mechanical linkage 47. In this case, the control circuitry 8 calculates the tension P applied to the mooring line 11 by using the following tension calculation formula (4).

[Math. 4]

$$P = F \times \frac{L}{d_D + (2 \times N - 1) \times d_R} \quad \cdot \cdot \cdot (4)$$

L: horizontal distance [mm] from the center of the winch drum 3 to the center of the pin 49

(Summary)

A mooring line tension monitoring system according to the present disclosure includes: a winch drum, around which a mooring line is wound; a band brake including a brake drum that rotates together with the winch drum; a winding layer number detector that detects the number of winding layers of the mooring line on the winch drum; a load cell that is incorporated in the band brake and that measures band tension; and control circuitry that calculates tension applied to the mooring line based on the number of winding layers of the mooring line detected by the winding layer number detector and the band tension measured by the load cell.

According to the above configuration, the winding layer number detector detects the number of winding layers of the mooring line on the winch drum. Therefore, the tension of the mooring line can be calculated by using the detected number of winding layers, instead of making constant the radius from the center of the winch drum to the line of action of the tension. This makes it possible to monitor the tension of the mooring line without using a split drum while a ship is moored.

The control circuitry may output the calculated tension to a display. According to this configuration, a ship crew looking at the display can know the tension of the mooring line.

The above mooring line monitoring system may further include a calibrator to check, when a ship is not moored, a relationship between band tension of the band brake and virtual tension of the mooring line at a rated number of winding layers of the mooring line. The control circuitry may: calculate the tension applied to the mooring line by using a tension calculation formula including a calibration coefficient; and set the calibration coefficient based on a result of checking by the calibrator. This configuration makes it possible to precisely calculate the tension of the mooring line.

**Reference Signs List**

1    mooring line monitoring system
11   mooring line
3    winch drum
4    band brake
41   brake drum
5    load cell
6    winding layer number detector
7    calibrator
8    control circuitry
9    display

**Claims**

1. A mooring line tension monitoring system comprising:

   a winch drum, around which a mooring line is wound;
   a band brake including a brake drum that rotates together with the winch drum;
   a winding layer number detector that detects the number of winding layers of the mooring line on the winch drum;
   a load cell that is incorporated in the band brake and that measures band tension; and
   control circuitry that calculates tension applied to the mooring line based on the number of winding layers of the mooring line detected by the winding layer number detector and the band tension measured by the load cell.

2. The mooring line tension monitoring system according to claim 1, wherein
   the control circuitry outputs the calculated tension to a display.

3. The mooring line tension monitoring system according to claim 1 or 2, further comprising a calibrator to check, when a ship is not moored, a relationship between band tension of the band brake and virtual tension of the mooring line at a rated number of winding layers of the mooring line, wherein
   the control circuitry:

calculates the tension applied to the mooring line by using a tension calculation formula including a calibration coefficient; and
sets the calibration coefficient based on a result of checking by the calibrator.

FIG. 1

FIG. 2

FIG. 3

FIG. 4

FIG. 5

64(6)

3

31

31

FIG. 6

FIG. 7

## INTERNATIONAL SEARCH REPORT

| | International application No. |
|---|---|
| | **PCT/JP2021/028913** |

**A.  CLASSIFICATION OF SUBJECT MATTER**

**B63B 21/16**(2006.01)i; **B63B 21/20**(2006.01)i
FI:   B63B21/16; B63B21/20 Z

According to International Patent Classification (IPC) or to both national classification and IPC

**B.  FIELDS SEARCHED**

Minimum documentation searched (classification system followed by classification symbols)
B63B21/16; B63B21/20

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C.  DOCUMENTS CONSIDERED TO BE RELEVANT**

| Category* | Citation of document, with indication, where appropriate, of the relevant passages | Relevant to claim No. |
|---|---|---|
| Y | JP 2002-211478 A (MITSUBISHI HEAVY INDUSTRIES, LTD.) 31 July 2002 (2002-07-31) claim 1, paragraphs [0005]-[0025], fig. 1-8 | 1-2 |
| Y | JP 63-17796 A (ISHIKAWAJIMA-HARIMA HEAVY INDUSTRIES CO., LTD.) 25 January 1988 (1988-01-25) page 2, lower left column, line 2 to page 3, lower right column, line 6, fig. 1-2, 4 | 1-2 |
| Y | JP 62-255365 A (NKK CORP.) 07 November 1987 (1987-11-07) page 2, lower right column, line 18 to page 4, upper right column, line 3, fig. 1-5 | 1-2 |
| A | 中村昌彦, 梶原宏之, 原正一, 眞鍋三雄, 才木秀俊, ウィンチ制御による係船の自動化に関する研究 ——その3 試作された電動ウィンチの制御—, 日本船舶海洋工学会講演会論文集, 2017, no. 4, pp. 367-370, DOI:10.14856/conf.4.0_367, ISSN 2424-1628, (NAKAMURA, Masahiko, KAJIWARA, Hiroyuki, HARA, Shoichi, MANABE, Mitsuo, SAIKI, Hidetoshi, "Automatic Control of Winch for Mooring: Part 3, Control of Electric Winch", Journal of the Japan Society of Naval Architects and Ocean Engineers) entire text, entire chart | 1-3 |

☑ Further documents are listed in the continuation of Box C.     ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **01 October 2021** | **19 October 2021** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**

International application No.

**PCT/JP2021/028913**

**C.     DOCUMENTS CONSIDERED TO BE RELEVANT**

| Category* | Citation of document, with indication, where appropriate, of the relevant passages | Relevant to claim No. |
|---|---|---|
| A | CN 102628719 A (WUHAN HUAZHONG TIANJING ELECTRO-OPTICAL SYSTEMS CO., LTD.) 08 August 2012 (2012-08-08) <br> entire text, all drawings | 1-3 |
| A | US 4070981 A (GUINN, David C., HAGGARD, Archie K., THOMAS, John P.) 31 January 1978 (1978-01-31) <br> entire text, all drawings | 1-3 |
| P, A | IGLESIAS-BANIELA, S., PEREZ-CANOSA, J. M., CID-BACORELLE D., "Spring-loaded Winch Band Brakes as Tools to Improve Safety During Mooring Operations on Ships", TRANSNAV, September 2020, vol. 14, no. 3, pp. 711-719, DOI:10.12716/1001.14.03.25, ISSN 2083-6481(online), 2083-6473(print) <br> entire text, all drawings | 1-3 |

Form PCT/ISA/210 (second sheet) (January 2015)

**INTERNATIONAL SEARCH REPORT**
Information on patent family members

International application No.

**PCT/JP2021/028913**

| Patent document cited in search report | | | Publication date (day/month/year) | Patent family member(s) | Publication date (day/month/year) |
|---|---|---|---|---|---|
| JP | 2002-211478 | A | 31 July 2002 | (Family: none) | |
| JP | 63-17796 | A | 25 January 1988 | (Family: none) | |
| JP | 62-255365 | A | 07 November 1987 | (Family: none) | |
| CN | 102628719 | A | 08 August 2012 | (Family: none) | |
| US | 4070981 | A | 31 January 1978 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002211478 A